# EUROPEAN PATENT SPECIFICATION

(11) **EP 3 778 527 B1**
(45) Date of publication and mention of the grant of the patent: **23.02.2022**
(21) Application number: 19191853.1
(22) Date of filing: 14.08.2019
(51) Int. Cl.: C04B 33/135

(54) **PROCESS FOR PREPARING A GRANULAR CERAMIC MIXTURE**
VERFAHREN ZUR HERSTELLUNG EINER GRANULAREN KERAMIKMISCHUNG
PROCÉDÉ DE PRÉPARATION D'UN MÉLANGE DE CÉRAMIQUE GRANULAIRE

(43) Date of publication of application: 17.02.2021
(73) Proprietor: Vecor IP Holdings Limited, Tsimshatsui, Kowloon (CN)
(72) Inventor: SEVERIN, Erik, Tsimshatsui, Hong Kong (CN); FERNANDEZ, Erwin N., Tsimshatsui, Hong Kong (CN); MISA, John Vincent Adap, Tsimshatsui, Hong Kong (CN)
(74) Representative: Patent Boutique LLP

(56) References cited:
- US-A1- 2016 053 162
- US-A1- 2017 073 274
- ZIMMER ET AL: "Fly ash of mineral coal as ceramic tiles raw material", WASTE MANAGEMENT, ELSEVIER, NEW YORK, NY, US, vol. 27, no. 1, 11 November 2006 (2006-11-11), pages 59-68, XP005760286, ISSN: 0956-053X, DOI: 10.1016/J.WASMAN.2006.01.009
- Federal Highway Administration: "Coal Fly Ash - User Guideline - Portland Cement Concrete - User Guidelines for Waste and Byproduct Materials in Pavement Construction - FHWA-RD-97-148", , 3 August 2016 (2016-08-03), XP055660372, Retrieved from the Internet: URL:https://www.fhwa.dot.gov/publications/ research/infrastructure/structures/97148/c fa53.cfm [retrieved on 2020-01-21]
- Michael Thomas: "Optimizing the Use of Fly Ash in Concrete", , 31 December 2007 (2007-12-31), XP055660382, Retrieved from the Internet: URL:https://www.cement.org/docs/default-so urce/fc_concrete_technology/is548-optimizi ng-the-use-of-fly-ash-concrete.pdf [retrieved on 2020-01-21]
- ISMAIL DEMIR ET AL: "Production of fired construction brick from high sulphate containing", WASTE MANAGEMENT AND RESEARCH, ACADEMIC PRESS, LONDON, US, 1 January 2009 (2009-01-01), pages 4-10, XP009169488, ISSN: 0734-242X, DOI: 10.1177/0734242X08096529

## Description

### Field of the invention

The present invention relates to the incorporation of fluid bed combustion fly ash, and especially circulating fluid bed combustion fly ash into a granular ceramic mixture.

### Background of the invention

### Fluid bed combustion (FBC) power plants versus pulverized coal combustion (PCC) power plants

Large quantities of fly ash are produced as a result of coal-fired electricity generation. This will continue into the foreseeable future. There is interest in how to utilise this fly ash waste material. Much fly ash is currently used in concrete as a pozzolan or cementitious material. Other uses include brick making and as a soil stabilisation material. However, much fly ash continues to go to landfill. This has obvious environmental, as well as economic, costs. There is therefore ongoing value and interest in developing products and processes that can use fly ash as a raw material. This minimises the amount of fly ash going to landfill and reduces the amounts of other virgin raw materials used.

The question of how to re-utilise the fly ash from power generation has become harder due to the introduction of fluidised bed combustion (FBC) technologies for thermal power generation and incineration. Fluidised bed combustion (FBC) plant designs are quite different to the pulverised coal combustion (PCC) plant designs that have been standard for power plants for many decades. The fly ash produced by FBC plants is different to PCC fly ash, and FBC fly ash is much harder than PCC fly ash to re-use in other applications such as ceramic production.

Fluidised bed combustors burn the coal in a heated fluidised bed of ash and/or sand at lower temperatures than PCC designs. Fluidised bed combustion (FBC) designs include "bubbling" fluidised beds as well as "circulating" fluidised bed designs. A bubbling fluid bed is also referred to as a "boiling fluid bed". Circulating fluidised beds, known as CFBs, are most common. The various FBC designs can be further divided based on the pressures at which they run, either atmospheric or pressurised.

Fluidised bed combustion (FBC) technology is becoming increasingly popular since plants using such technologies are less polluting. FBC plants emit much lower levels of nitrous oxides than conventional PCC plants, the removal of sulfur oxides is easier, and FBC plants can burn a wider range of fuels such as low-grade coal, and even fuels such as tyres and oil. Often these lower-grade fuels have a high sulfur content.

The solid/solid contact with hot particles in FBC plant designs gives very high heat exchange coefficients. This means that FBC plants can produce power efficiently at much lower temperatures: typically, between 800 - 900 °C, compared to 1400 - 1700 °C in a PCC plant. Being able to operate efficiently at lower combustion temperatures has large advantages. In particular, the formation of nitrous oxides is lower in FBC plants, and NOₓ pollution is therefore reduced.

The removal of sulfur oxides is also simpler in FBC plants as compared to PCC plants. Typically, PCC plants burn higher quality, lower sulfate coals such as anthracite. Typically, PCC plants have wet scrubbers which treat the exhaust gases to chemically remove the sulfur oxides via a process called flue gas desulfurisation (FGD). This is a costly and intensive process.

In contrast to PCC plants, FBC plants typically reduce their sulfur oxide emissions by burning a mixture of fuel and limestone/chalk/dolomite. The limestone material (calcium carbonate) forms calcium oxide within the fluidised bed. This reacts with sulfur oxides from the combustion of sulfur compounds in the fuel to form calcium sulfate *in-situ.* This is possible as the temperatures are low enough in the fluidised bed for calcium sulfate minerals such as anhydrite to be stable and readily formed.

Such reactions would not be possible in a PCC plant due to the high temperatures used. Hence their need for a separate FGD system.

The addition of limestone material to the coal to allow sulfur oxides to react *in-situ* is a much simpler process than having to scrub the flue gases.

### The differences between fluid bed combustion (FBC) fly ash and pulverised coal combustion (PCC) fly ash

The addition of significant amounts of limestone material to the boiler in a fluid bed combustion (FBC) plant means that the fluid bed combustion (FBC) fly ash typically comprises high levels of calcium species and sulfur species.

The levels of calcium species in FBC fly ash, usually reported as the equivalent calcium oxide level, are often higher than even high calcium oxide (Type C) fly ashes from PCC plants.

In addition, the levels of sulfur species in FBC fly ash, usually reported as the equivalent sulfur oxide level, are higher than the sulfur oxide level of PCC fly ash.

The ASTM-C618 standard is commonly used to define suitable fly ash quality for use as a pozzolan or cementitious product. The upper SO₃ limit for materials to meet ASTM-C618 is 5wt%. FBC fly ash typically comprises a much higher level of oxide of sulfur.

Physically, the fly ash from FBC designs is quite different to conventional PCC fly ash. The FBC fly ash has not been subjected to the very high temperatures encountered in the exhaust systems of conventional PCC plants. The fly ash produced in PCC plants has been suspended in the very hot effluent combustion gases. The temperatures experienced are high enough to melt particles. This means that the large majority of PCC fly ash particles are spherical and formed of glassy amorphous phases.

In contrast, fly ash from FBC plants, and especially CFB combustion plants, will not have been melted due to the lower temperatures of the FBC. As a result, the FBC fly ash particles have an irregular shape and do not contain glassy phases. Another difference is that the time for which the fly ash has been subjected to high temperatures is typically much longer in FBC plants, especially those plants where high levels of fly ash are recirculated, such as in a CFB combustion plant. This means, for example, that, whilst the iron in PCC fly ash is often present as magnetite and hematite, in FBC fly ash, and CFB combustion fly ash, it is mostly present as ferrite. This has major implications, for example, the ease of iron removal.

PCC and FBC fly ash are different chemically (e.g. typically having different levels of calcium species and sulfate species), different physically (e.g. typically having different morphologies, e.g. regular/glassy (PCC) compared to irregular/non-glassy (FBC)), and different mineralogically. FBC fly ash also has a smaller diameter than PCC fly ash (due to a self-grinding action) and has a lower residual carbon level compared to PCC fly ash.

### Milling of materials during the production of granular ceramic mixtures

Milling of ingredients during the production of granular ceramic mixture is common.

Small, and controlled, ceramic ingredient particle sizes are very important for making good quality ceramic articles, especially when high strength and low porosity are important. This is particularly the case for porcelain tiles.

Many ceramics ingredients, such as clays and feldspar, come as quite large particles from quarries and are completely unsuitable for incorporation into granular ceramic mixtures "as is". Hence the ingredients are typically milled to create the fine particles required for ceramics use.

Mills are expensive, so it is very common in ceramics plants, such as plants for making porcelain tiles, for all of the ingredients to be milled together using one comminution system. Co-milling of the ceramic ingredients usually has little or no impact on the compositional nature of the resultant granular ceramic mixture and ceramic article. As a result, it is standard practice to mill and blend the ingredients at the same time by feeding multiple ingredients simultaneously into the mill. The ingredients can be added simultaneously to the mill, or the ingredients can be mixed prior to being dosed into the mill.

Many types of mill can be used, such as ball mills, rod mills, impact mills, roller mills etc. The milling action creates fine particles in a highly homogenised ceramic mixture suitable for use in making ceramic articles.

### The problem of incorporating fluid bed combustion (FBC) fly ash, and especially circulating fluid bed (CFB) combustion fly ash, in a granular ceramic mixture

Most of the FBC fly ash is currently sent to landfill or used as a very low value soil stabilisation agent. It is less effective than PCC fly ash as a pozzolan. In addition, the high sulfate levels can cause problems. There is an urgent need to find alternative uses for FBC fly ash, for example in ceramic articles such as ceramic floor tiles and porcelain tiles.

Fly ash can be used as a partial replacement for clays in ceramic articles. Fly ash can be combined with clay and other materials such as feldspar to form granular ceramic mixtures. The granular ceramic mixtures can then be formed into ceramic articles, such as ceramic tiles and especially porcelain tiles. Such ceramic articles can be made with significant levels of fly ash and this is known in the art.

The replacement of clay by fly ash is beneficial as supplies of suitable clay are becoming limited. Maximising the practical level of clay that can be replaced by fly ash is beneficial.

However, the fly ashes used in the art are mostly PCC fly ash. FBC, and particularly CFB combustion, technology is a relatively recent development, and was not in use when earlier ceramic art was developed. Hence issues relating specifically to the use of FBC fly ash in ceramics applications were not recognised, or even relevant, to most of this body of fly ash work. For example, the art describes fly ash as consisting of spheres of amorphous, glassy phases, which is a description of PCC fly ash and not FBC fly ash. It is clear that the art is referring to PCC fly ash.

The inventors have discovered that simply replacing PCC fly ash with FBC fly ash, and especially CFB combustion fly ash in ceramic compositions that also contain clays, feldspars and optionally other ingredients, can cause defects. Ceramic articles made using FBC fly ash have been observed to crack during the heating stage of the firing cycle. This is particularly problematic when making high quality, large ceramic items such as ceramic floor tiles, and especially porcelain floor tiles, where such defects are particularly unacceptable. The incorporation of fly ash into porcelain floor tiles, which need to have low water absorption and high flexural strength, is particularly challenging.

The inventors have also seen that this problem is exacerbated when the FBC fly ash is used at higher levels in ceramics applications.

The inventors have found that FBC fly ash can be introduced into granular ceramic mixtures by milling the FBC fly ash separately from the clay. The milled FBC fly ash and milled clay are then blended together, along with the other ceramic ingredients, to form the granular ceramic mixture.

Without wishing to be bound by theory, it is hypothesised that the high energy environment inside the mill and the high level of surface to surface contacts between the clay and FBC ash particles when they are milled together result in the formation of higher levels of mineral phases which change the firing behaviour of the resultant granular ceramic mixture. By milling these materials separately, this unwanted behaviour is avoided, and it is possible to incorporate FBC fly ash into granular ceramic mixtures whilst avoiding the above described problems.

US 2017/073274 A1 relates to a process of preparing a granular ceramic mixture.

US 2016/053162 A1 relates to a method of manufacturing light ceramic proppants made from a mixture of raw materials that include fly ash from brown coal combusted in a power plant.

Zimmer et Al. :"Fly ash of mineral coal as ceramic tiles raw material", Waste Management Elsevier, New York, vol. 27, no. 1, 11-11-2006 relates to the use of mineral coal fly ash as a raw material in the production of ceramic tiles.

### Summary of the invention

The present invention provides a process for preparing a granular ceramic mixture, wherein the process comprises the steps of:
(a) milling fluid bed combustion fly ash to obtain milled fluid bed combustion fly ash;
(b) milling clay to obtain milled clay;
(c) contacting together:
   (i) the milled fluid bed combustion fly ash obtained in step (a);
   (ii) the milled clay obtained in step (b);
   (iii) optionally, feldspar, and
   (iv) optionally, other ingredients,
to form the granular ceramic mixture, wherein step (a) and step (b) are carried out separate milling steps.

### Detailed description of the invention

### Process for preparing a granular ceramic mixture

The process of preparing a granular ceramic mixture comprises the steps of:
(a) milling fluid bed combustion fly ash to obtain milled fluid bed combustion fly ash;
(b) milling clay to obtain milled clay;
(c) contacting together:
   (i) the milled fluid bed combustion fly ash obtained in step (a);
   (ii) the milled clay obtained in step (b);
   (iii) optionally, feldspar, and
   (iv) optionally, other ingredients,
to form the granular ceramic mixture, wherein step (a) and step (b) are carried out separate milling steps.

### Step (a) milling the fluid bed combustion fly ash

The fluid bed combustion fly ash is milled to obtain milled fluid bed combustion fly ash. Suitable mills are ball mills, rod mills especially vibrating rod mills, and roller mills such as pendulum and table mills. Typically, no clay is present when the FBC fly ash is milled during step (a).

### Step (b) milling the clay

Clay is milled to obtain milled clay. Very often clay is co-milled with other ingredients as it can contain high levels of moisture. Typically, the clay is co-milled with other ingredients such as feldspar. The clay may be milled in a mill that is also a dryer so as to deal with any stickiness. It is especially preferred if the mill used to mill the clay ingredient has a drying capability. Typically, no FBC fly ash is present when the clay is milled during step (b).

### Step (c) contacting ingredients to form the granular ceramic mixture

In step (c) the following ingredients are contacted together:
(i) the milled fluid bed combustion fly ash obtained in step (a);
(ii) the milled clay obtained in step (b);
(iii) optionally, feldspar, and
(iv) optionally, other ingredients,
to form the granular ceramic mixture,

### Step of milling the Feldspar

If present, the feldspar may undergo a milling step to form milled feldspar during the process. Typically, this is done in combination with other ceramic ingredients, such as co-milling the feldspar with the clay.

### Granular ceramic mixture

Preferably, the granular ceramic mixture comprises:
(a) from 10wt% to 60wt%, or from 20wt% to 50wt%, fluid bed combustion fly ash;
(b) from 15wt% to 55wt% clay;
(c) from 0wt% to 35wt%, or from 5wt% to 25wt%, feldspar; and
(d) optionally, other ingredients to 100wt%.

Preferably, the granular ceramic mixture comprises:
(a) from 20wt% to 50wt% fluid bed combustion fly ash;
(b) from 15wt% to 50wt%, or from 15wt% to 35wt%, clay;
(c) from 0wt% to 25wt%, feldspar; and
(d) optionally, other ingredients to 100wt%.

Typically, the granular ceramic mixture has a particle size distribution such that:
(i) the dso particle size is from 5µm to 40µm, or from 10µm to 40µm; and
(ii) the d₉₈ particle size is less than 75µm, or less than 60µm .

### Fluid bed combustion fly ash

Suitable fluid bed combustion fly ash can be atmospheric fluid bed combustion fly ash, pressurized fluid bed combustion fly ash, or a combination thereof.

Suitable fluid bed combustion fly ash can be circulating fluid bed combustion fly ash, bubbling fluid bed combustion fly ash, or a combination thereof.

A preferred fluid bed combustion fly ash is circulating fluid bed combustion fly ash.

Typically, the fluid bed combustion fly ash comprises greater than 5.0wt% oxide of sulfur, or greater than 6.0wt%, or greater than 7.0wt%, or greater than 10wt% oxide of sulfur.

Typically, the fluid bed combustion fly ash is derived from coal, and is typically fluid bed combustion coal fly ash.

### Milled fluid bed combustion fly ash

Typically, the milled fluid bed combustion fly ash has a particle size distribution such that:
(i) the dso particle size is from 5µm to 40µm, or from 10µm to 40µm; and
(ii) the d₉₈ particle size is less than 75µm, or less than 60µm.

### Oxide of sulfur

Analysis of the elemental composition of fly ash is most commonly done by X-ray fluorescence (XRF) techniques. This measures the levels of the heavier elements, such as iron, aluminium, silicon, sulfate and calcium. The convention is that these are then reported as the equivalent level of oxide. Iron levels are reported as Fe₂O₃ even if the iron is not actually in that form. Calcium is reported as CaO and sulfur is reported as SO₃. Hence, a material such as CaSO₄ is typically reported as CaO and SO₃.

SO₃ is often referred to as "sulfate" in the ceramic literature even though the term "sulfate" technically refers to the SO₄²⁻ ion. Sometimes sulfur is reported as elemental sulfur but how the sulfur is reported makes no difference to the actual levels present. The present invention therefore uses the term "oxide of sulfur" to be more general. "Oxide of sulfur", SO₃ and "sulfate" are interchangeable terms when used herein.

The level of oxide of sulfur present in the fly ash can be determined using the following XRF method.

Suitable XRF equipment is the Epsilon 4 XRF analyser from Malvern Panalytical using sample disks prepared using an Aegon 2 automatic fusion equipment for sample disk preparation from Claisse. The ash sample is automatically dissolved in molten lithium borate flux and formed into a disk. This is then placed in the Epsilon 4 for analysis. Equipment should be operated as per manufacturer's instructions. When measuring for SO₃, the Epsilon 4 should be set to a voltage of 4.5 kV, a current of 3000µa, use helium as the medium, not use a filter, and have a measurement time of 450s.

### Clay

A suitable clay is a standard clay such as Ukrainian clay or illitic clay. A preferred clay is a combination of standard clay and high plasticity clay. The weight ratio of standard clay to high plasticity clay may in the range of from 2:1 to 5:1. A suitable clay is a high plasticity clay such as bentonite clay. Typically, a high plasticity clay has an Attterburg Plasticity Index of greater than 25.0. Typically, a standard clay has an Atterburg Plasticity Index of 25.0 or less. The amount of high plasticity clay can be selected to provide sufficient robustness and flowability for granular ceramic mixtures.

### Milled clay

Typically, the milled clay has a particle size distribution such that:
(i) the dso particle size is from 5µm to 40µm, or from 10µm to 40µm; and
(ii) the d₉₈ particle size is less than 75µm, or less than 60µm.

### Feldspar

Suitable feldspars include sodium and/or potassium feldspars.

### Milled feldspar

Typically, the milled feldspar has a particle size distribution such that
(i) the dso particle size is from 5µm to 40µm, or from 10µm to 30µm; and
(ii) the d₉₈ particle size is less than 75µm, or less than 60µm.

### Optional ingredients

Other optional ingredients include chemical additives and binders.

### Method of measuring particle size distribution:

The particle size distribution is measured by laser diffraction. A suitable standard for size analysis by laser diffraction is given in ISO 13320:2009. Suitable size analysers are the Mastersizer 2000 and 3000 instruments by Malvern Instruments. It is preferred to disperse the samples by compressed air (usually with a Scirocco 2000 unit) where the material is tested as a powder stream, rather than the wet method where the test material is dispersed in a fluid first. However, it is possible to disperse and test these ceramic mixtures in non-aqueous liquids. The measurement is typically done as per the manufacturer's instruction manual and test procedures.

The results are typically expressed in accordance with ISO 9276-2.

### Examples

### Inventive example

Two mixtures (a and b) were prepared using separate ball mill containers (both having a diameter of 152 mm and depth of 172 mm).
a FBC flay ash
b (illitic) clay + soda feldspar blended at a 1:1 weight ratio

200g of a and b were milled by placing both containers in a planetary ball mill (MITR, model YXQM-8L) at 180 rpm for 60 min. Each container had approx 1250g of alumina grinding balls added to it. The alumina balls (density 3.95 g/ml) have the following size distribution: 5 mm (50%wt), 10 mm (32%wt), 20 mm (18%wt).

After milling, both a and b had a d98 of < 20µm.

The milled CFB ash (a) and 1:1 clay/feldspar mix (b) were mixed together as follows:
50 parts of (a) FBC fly ash; and
50 parts of (b) clay/feldspar,
Total 100 parts.

The mixture was then shaken through a 500µm mesh three times to thoroughly mix the powders. Following this, 8 parts of water were sprayed to the powder as binder. The wetted ceramic powder mix was then shaken through the 500µm mesh and granulated prior to pressing.

140g of the above ceramic powder mix was then uniaxially pressed in a rectangular mild steel mold (155x40mm) to a pressure of 40MPa which was held for 1.5min (90sec). The formed body was released from the mold and placed into a 110°C oven to dry.

The dried body was fired in an electric kiln at a ramp rate of 2.5°C/min to 1160°C. The temperature was held at the top temperature for 30min. The kiln was then allowed to cool down naturally (hence slowly) to room temperature.

No cracking was observed in the fired body.

### Comparative example

The above procedure was repeated except that all of the ingredients are milled together. 100g of FBC fly ash, 40g clay and 50g feldspar were milled together in one ball mill container using the same processing conditions as previously.

The co-milled mixture was then formed into a fired body using the procedure and conditions described above.

Cracking was observed in this fired body.

## Claims

1. A process for preparing a granular ceramic mixture, wherein the process comprises the steps of:
(a) milling fluid bed combustion fly ash to obtain milled fluid bed combustion fly ash;
(b) milling clay to obtain milled clay;
(c) contacting together:
(i) the milled fluid bed combustion fly ash obtained in step (a);
(ii) the milled clay obtained in step (b);
(iii) optionally, feldspar, and
(iv) optionally, other ingredients,
to form the granular ceramic mixture,
wherein step (a) and step (b) are carried out separate milling steps.

2. A process according to claim 1, wherein the milled fluid bed combustion fly ash has a particle size distribution such that:
(i) the d₅₀ particle size is from 5µm to 40µm; and
(ii) the d₉₈ particle size is less than 75µm.

3. A process according to claim 1, wherein the milled clay has a particle size distribution such that:
(i) the d₅₀ particle size is from 5µm to 40µm; and
(ii) the d₉₈ particle size is less than 75µm.

4. A process according to any preceding claim, wherein the feldspar undergoes a milling step to form milled feldspar during the process.

5. A process according to claim 4, wherein the milled feldspar has a particle size distribution such that
(i) the d₅₀ particle size is from 5µm to 40µm; and
(ii) the d₉₈ particle size is less than 75µm.

6. A process according to any preceding claim, wherein the granular ceramic mixture comprises:
(a) from 10wt% to 60wt% fluid bed combustion fly ash;
(b) from 15wt% to 55wt% clay; and
(c) from 0wt% to 35wt% feldspar;
(d) optionally, other ingredients to 100wt%.

7. A process according to any preceding claim, wherein the granular ceramic mixture comprises:
(a) from 20wt% to 50wt% fluid bed combustion fly ash;
(b) from 15wt% to 35wt% clay;
(c) from 0wt% to 25wt% feldspar; and
(d) optionally, other ingredients to 100wt%.

8. A process according to any preceding claim, wherein the granular ceramic mixture has a particle size distribution such that:
(i) the d₅₀ particle size is from 5µm to 40µm; and
(ii) the d₉₈ particle size is less than 75µm.

9. A process according to any preceding claim, wherein the fluid bed combustion fly ash is circulating fluid bed combustion fly ash.

10. A process according to any preceding claim, wherein the fluid bed combustion fly ash comprises greater than 5.0wt% oxide of sulfur.

11. A process according to any preceding claim, wherein the fluid bed combustion fly ash comprises greater than 10wt% oxide of sulfur.

## Patentansprüche

1. Verfahren zum Herstellen einer körnigen Keramikmischung, wobei das Verfahren die folgenden Schritte umfasst:
(a) Mahlen von Flugasche aus Wirbelschichtverbrennung, um gemahlene Flugasche aus Wirbelschichtverbrennung zu erhalten;
(b) Mahlen von Ton, um gemahlenen Ton zu erhalten;
(c) gemeinsames Kontaktieren:
(i) der gemahlenen Flugasche aus Wirbelschichtverbrennung, die in Schritt (a) erhalten wird;
(ii) des gemahlenen Tons, der in Schritt (b) erhalten wird;
(iii) optional Feldspat, und
(iv) optional anderer Bestandteile,
um die körnige Keramikmischung zu bilden,
wobei Schritt (a) und Schritt (b) separate Mahlschritte durchgeführt werden.

2. Verfahren nach Anspruch 1, wobei die gemahlene Flugasche aus Wirbelschichtverbrennung eine Partikelgrößenverteilung aufweist, sodass:
(i) die d₅₀-Partikelgröße 5 µm bis 40 µm ist; und
(ii) die d₉₈-Partikelgröße weniger als 75 µm ist.

3. Verfahren nach Anspruch 1, wobei der gemahlene Ton eine Partikelgrößenverteilung aufweist, sodass:
(i) die d₅₀-Partikelgröße 5 µm bis 40 µm ist; und
(ii) die d₉₈-Partikelgröße weniger als 75 µm ist.

4. Verfahren nach einem vorhergehenden Anspruch, wobei der Feldspat einen Mahlschritt durchläuft, um während des Verfahrens gemahlenen Feldspat zu bilden.

5. Verfahren nach Anspruch 4, wobei der gemahlene Feldspat eine Partikelgrößenverteilung aufweist, sodass
(i) die d₅₀-Partikelgröße 5 µm bis 40 µm ist; und
(ii) die d₉₈-Partikelgröße weniger als 75 µm ist.

6. Verfahren nach einem vorhergehenden Anspruch, wobei die körnige Keramikmischung Folgendes umfasst:
(a) 10 Gew.-% bis 60 Gew.-% Flugasche aus Wirbelschichtverbrennung;
(b) 15 Gew.-% bis 55 Gew.-% Ton; und
(c) 0 Gew.-% bis 35 Gew.-% Feldspat;
(d) optional andere Bestandteile auf 100 Gew.-%.

7. Verfahren nach einem vorhergehenden Anspruch, wobei die körnige Keramikmischung Folgendes umfasst:
(a) 20 Gew.-% bis 50 Gew.-% Flugasche aus Wirbelschichtverbrennung;
(b) 15 Gew.-% bis 35 Gew.-% Ton;
(c) 0 Gew.-% bis 25 Gew.-% Feldspat; und
(d) optional andere Bestandteile auf 100 Gew.-%.

8. Verfahren nach einem vorhergehenden Anspruch, wobei die körnige Keramikmischung eine Partikelgrößenverteilung aufweist, sodass:
(i) die d₅₀-Partikelgröße 5 µm bis 40 µm ist; und
(ii) die d₉₈-Partikelgröße weniger als 75 µm ist.

9. Verfahren nach einem vorhergehenden Anspruch, wobei die Flugasche aus Wirbelschichtverbrennung zirkulierende Flugasche aus Wirbelschichtverbrennung ist.

10. Verfahren nach einem vorhergehenden Anspruch, wobei die Flugasche aus Wirbelschichtverbrennung mehr als 5,0 Gew.-% Schwefeloxid umfasst.

11. Verfahren nach einem vorhergehenden Anspruch, wobei die Flugasche aus Wirbelschichtverbrennung mehr als 10 Gew.-% Schwefeloxid umfasst.

## Revendications

1. Processus pour préparer un mélange de céramique granulaire, le processus comprenant les étapes de :
(a) broyage de cendre volante pour combustion en lit fluidisé afin d'obtenir de la cendre volante broyée pour combustion en lit fluidisé ;
(b) broyage d'argile pour obtenir de l'argile broyée ;
(c) mise en contact de :
(i) la cendre volante broyée pour combustion en lit fluidisé obtenue à l'étape (a) ;
(ii) l'argile broyée obtenue à l'étape (b) ;
(iii) optionnellement, du feldspath, et
(iv) optionnellement, d'autres ingrédients,
pour former le mélange de céramique granulaire,
où l'étape (a) et l'étape (b) sont exécutées en étapes de broyage séparées.

2. Processus selon la revendication 1, dans lequel la cendre volante broyée pour combustion en lit fluidisé a une distribution granulométrique telle que :
(i) la taille de particule dso soit de 5 µm à 40 µm ; et
(ii) la taille de particule d₉₈ soit inférieure à 75 µm.

3. Processus selon la revendication 1, dans lequel l'argile broyée a une distribution granulométrique telle que :
(i) la taille de particule dso soit de 5 µm à 40 µm ; et
(ii) la taille de particule d₉₈ soit inférieure à 75 µm.

4. Processus selon l'une quelconque des revendications précédentes, dans lequel le feldspath subit une étape de broyage pour former du feldspath broyé pendant le processus.

5. Processus selon la revendication 4, dans lequel le feldspath broyé a une distribution granulométrique telle que
(i) la taille de particule dso soit de 5 µm à 40 µm ; et
(ii) la taille de particule d₉₈ soit inférieure à 75 µm.

6. Processus selon l'une quelconque des revendications précédentes, dans lequel le mélange de céramique granulaire comprend :
(a) de 10 % en poids à 60 % en poids de cendre volante pour combustion en lit fluidisé ;
(b) de 15 % en poids à 55 % en poids d'argile ; et
(c) de 0 % en poids à 35 % en poids de feldspath ;
(d) optionnellement, d'autres ingrédients jusqu'à 100 % en poids.

7. Processus selon l'une quelconque des revendications précédentes, dans lequel le mélange de céramique granulaire comprend :
(a) de 20 % en poids à 50 % en poids de cendre volante pour combustion en lit fluidisé ;
(b) de 15 % à 35 % en poids d'argile ;
(c) de 0 % à 25 % en poids de feldspath ; et
(d) optionnellement, d'autres ingrédients jusqu'à 100 % en poids.

8. Processus selon l'une quelconque des revendications précédentes, dans lequel le mélange de céramique granulaire a une distribution granulométrique telle que :
(i) la taille de particule dso soit de 5 µm à 40 µm ; et
(ii) la taille de particule d₉₈ soit inférieure à 75 µm.

9. Processus selon l'une quelconque des revendications précédentes, dans lequel la cendre volante pour combustion en lit fluidisé est une cendre volante pour combustion en lit fluidisé circulant.

10. Processus selon l'une quelconque des revendications précédentes, dans lequel la cendre volante pour combustion en lit fluidisé comprend plus de 5,0 % en poids d'oxyde de soufre.

11. Processus selon l'une quelconque des revendications précédentes, dans lequel la cendre volante pour combustion en lit fluidisé comprend plus de 10 % en poids d'oxyde de soufre.
